# EUROPEAN PATENT APPLICATION

(11) **EP 2 048 391 A2**
(43) Date of publication of application: **15.04.2009**
(21) Application number: 08017573.0
(22) Date of filing: 07.10.2008
(51) Int. Cl.: F16C 33/20

(54) **Sliding bearing**

(30) Priority: 10.10.2007 JP 2007264326
(71) Applicant: Daido Metal Company Ltd., Naka-ku Nagoya (JP)
(72) Inventor: Nakasone, Takeyuki, Inuyama-shi Aichi (JP); Kawakami, Naohisa, Inuyama-shi Aichi (JP); Naka, Isei, Inuyama-shi Aichi (JP); Tanaka, Takuya, Inuyama-shi Aichi (JP)
(74) Representative: Beckmann, Claus

(57) **Abstract**

A sliding bearing is provided to enable suppressing peeling of a resin layer, which is bonded to a bearing alloy, at the time of initial operation.

3 to 15 volume percent of film strength control particles (4) having an average particle size of 0.05 to 0.7 µm is added to a resin layer (2), of which a base resin is composed of one or more of PAI resin, PBI resin, and PI resin, whereby shearing stress at an interface of the resin layer (2) with the bearing metal can be relaxed by putting that shearing stress, which is generated in the resin layer (2) upon contact with a rotating shaft, in an wear configuration, in which minute shear pieces generate in the resin layer (2). Further, while it is estimated that a decrease in strength of the resin layer (2) caused by addition of film strength control particles (4) leads to a decrease in wear resistance, a wear configuration, in which the film strength control particles (4) are controlled in surface area and minute shear pieces generate, is adopted whereby it is possible to obtain a highly durable resin layer being conversely small in wear loss, sufficient in thermostability and wear resistance, and susceptible to no peeling at the time of initial operation.

## Description

### Background of the Invention

The present invention relates to a sliding bearing comprising a resin layer, of which a base resin is composed of one or more of polyamide imide resin, polybenzimidazole resin, and polyimide resin, coated on surfaces of a bearing alloy.

Conventionally, used for a sliding bearing in internal combustion engines is a bearing including a resin sliding layer formed as a conformed layer on a bearing alloy of the sliding bearing, as shown in, for example, JP-A-2002-242933. Polyamide imide resin, polybenzimidazole resin, or polyimide resin, which are high thermostability, is frequently used in internal combustion engines since bearing portions therein are high in ambient temperature.

However, high thermostability resins, such as polyamide imide resin, polybenzimidazole resin, and polyimide resin, etc., shown in JP-A-2002-242933 are also high in strength and a sliding layer itself is also high in wear resistance but there is caused a problem that a resin sliding layer peels at the time of initial wear in internal combustion engines. Initial wear is caused on a surface of a resin sliding layer in a manner to be conformed to the shape of a shaft surface within several hours to several tens of hours just after the start of an initial operation after an internal combustion engine is assembled. At the time of initial wear, a high shearing force acts on the resin sliding layer due to contact with a rotating shaft, so that peeling is liable to generate at a bond interface with a bearing alloy layer.

While the problem described above is solved by making the bond strength of a resin sliding layer and a bearing alloy higher than the strength of the resin, an increase in bond strength is limited since bonding of a resin and a metal, which are different substances, consists simply in adhesion of the resin to the metal.

### Summary of the Invention

The invention has been thought of in view of the situation and has its object to provide a sliding bearing capable of suppressing peeling of a resin layer, which is bonded to a bearing alloy, at the time of initial operation.

In order to attain the object, the invention according to claim 1 provides a sliding bearing comprising a resin layer, of which a base resin is composed of one or more of polyamide imide resin, polybenzimidazole resin, and polyimide resin, coated on a surface of a bearing alloy, and wherein 3 to 15 volume percent of film strength control particles having an average particle size of 0.05 to 0.7 µm is added to the resin layer.

The invention according to claim 2 adds to the invention according to claim 1 a feature that 25 to 55 volume percent of a solid lubricant containing one or more of molybdenum disulfide, graphite, and polytetrafluoroethylene resin is added to the resin layer.

In the invention according to claim 1, 3 to 15 volume percent of film strength control particles having an average particle size of 0.05 to 0.7 µm is added to the resin layer, of which a base resin is composed of one or more of polyamide imide resin (referred below to as "PAI resin"), polybenzimidazole resin (referred below to as "PBI resin"), and polyimide resin (referred below to as "PI resin"), whereby shearing stress generated in the resin layer upon contact with a rotating shaft is relaxed by converting to a form of a wear configuration, in which minute shear pieces generate in the resin layer, with the result that it is possible to relax shearing stress at an interface of the resin layer with the bearing metal. Further, while it is estimated that a decrease in strength of the resin layer caused by addition of film strength control particles leads to a decrease in wear resistance, a form of a wear, in which the film strength control particles are controlled in surface area and minute shear pieces generate, is adopted whereby it is possible to conversely achieve a decrease in wear loss. Consequently, a highly durable resin layer being sufficient in heat resistance and wear resistance and susceptible to no peeling at the time of initial operation is obtained. In addition, other thermosetting resins and thermoplastic resins (for example, polyether sulphone resin (referred below to as "PES resin")) may be added to a base resin to adjust physical properties within that range, in which no influences are exerted on heat resistance.

Also, by selecting 0.7 µm or less for an average particle size of film strength control particles, the film strength control particles are large in number and the film strength control particles per unit volume of a resin are made very large in surface area. Film strength control particles and a resin are bonded together with adhesion of the resin and put in a state, in which they can be sheared readily. When contact with a rotating shaft occurs in such state, elastic deformation of the resin caused by shearing stress upon the contact is prevented by the film strength control particles and stress concentration occurs. Therefore, breakage occurs on resin neck portions, in which particles are close to one another and which are small in cross sectional area, so that wear occurs to produce minute shear pieces. Also, while the film thickness of a lubricating oil between an inner surface of a bearing and a surface of a shaft becomes around 1 µm at a minimum when an internal combustion engine operates, the film strength control particles are made 0.7 µm or less to be considerably small relative to the minimum oil thickness whereby film strength control particles having been abraded are discharged outside the bearing surface together with the lubricating oil to have no influences on sliding characteristics.

It is necessary to make film strength control particles equal to or less than 0.7 µm in average particle size. When film strength control particles having an average particle size of more than 0.7 µm are used, they bear a load from the shaft as hard substance particles, so that an increase in wear resistance is achieved but peeling of a bearing alloy and a resin layer becomes liable to occur since resin neck portions are small in quantity, minute shear pieces become hard to generate, and shearing stress applied on the resin layer becomes hard to relax. Also, film strength control particles having been abraded roll on a resin surface to easily bring about roughening abrasion. On the other hand, film strength control particles having an average particle size of less than 0.05 µm are not only high in industrial price but also liable to coagulate in a resin paint, so that the film strength control particles are not uniformly dispersed in the resin.

Also, in the case where the rate of content of film strength control particles is less than 3 volume percent, resin neck portions are decreased in quantity to make it hard for minute shear pieces to produce, but when the rate of content is over 15 volume percent, resin neck portions become too large in quantity, so that a marked decrease in film strength is caused to lead to a decrease in wear resistance.

Also, various metals, intermetallic compounds, ceramic powder, etc., which form a dissimilar material being high in strength relative to resins, can be used as film strength control particles. In particular, ceramics being high in strength and further low in ductility is preferable in order to make shear pieces minute. Ceramics such as alumina, silica, titania, zirconia, oxides such as yttrium oxide, scandium oxide, etc. and carbides such as TiC, SiC, etc. can be used. In addition, in the case where a soft metal being highly ductile is selected as film strength control particles, there is a disadvantage that elastic deformation of metal powder makes concentration hard to occur, and in case of selecting a solid lubricant, such as graphite, etc., which fractures in a layered fashion to lead to a decrease in friction coefficient, stress concentration is hard to occur and an effect as film strength control particles is small, so that the both are not suitable.

Also, by adding 25 to 55 volume percent of a solid lubricant containing one or more of molybdenum disulfide (referred below to as "MoS₂"), graphite (referred below to as "Gr"), and polytetrafluoroethylene resin (referred below to as "PTFE") to the resin layer as in the invention according to claim 2, a resin layer containing film strength control particles can be heightened in sliding characteristics. In this case, since the film strength control particles are present in a dispersed manner in the resin layer and not dispersed in particles of the solid lubricant, a form of a wear in which minute shear pieces generate, is the same. Peeling is not generated by an effect of relaxing shearing stress applied on the resin layer and the bearing metal owing to the film strength control particles and an effect of preventing direct contact of the solid lubricant and the bearing metal since the film strength control particles are dispersed in minute in the resin layer to be present between the solid lubricant and the bearing metal.

Since MoS₂, Gr, PTFE added as the solid lubricant are flat and the solid lubricant is in no way bonded to the bearing metal but only contacts therewith, however, when 55 volume percent or more of the solid lubricant is added to the resin layer, a contact area with the solid lubricant is increased at an interface of the bearing metal and a contact area of the bearing metal with the resin is decreased, thus making whole peeling liable to occur, but with 25 volume percent or less, conformability is decreased and so it is not possible to achieve an improvement in sliding characteristics.

### Brief Description of the Drawings

Fig. 1 is a cross sectional view showing a sliding bearing according to an embodiment of the invention;
Figs. 2A and 2B are conceptual views illustrating the relationship between film strength control particles in a resin layer and breakage upon application of shearing stress;
Figs. 3A, 3B, and 3C are conceptual views illustrating the relationship between the particle size of film strength control particles in a resin layer and the contents thereof; and
Figs. 4A and 4B are conceptual views illustrating the relationship between a solid lubricant and film strength control particles in a resin layer.

### Description of the Preferred Embodiment

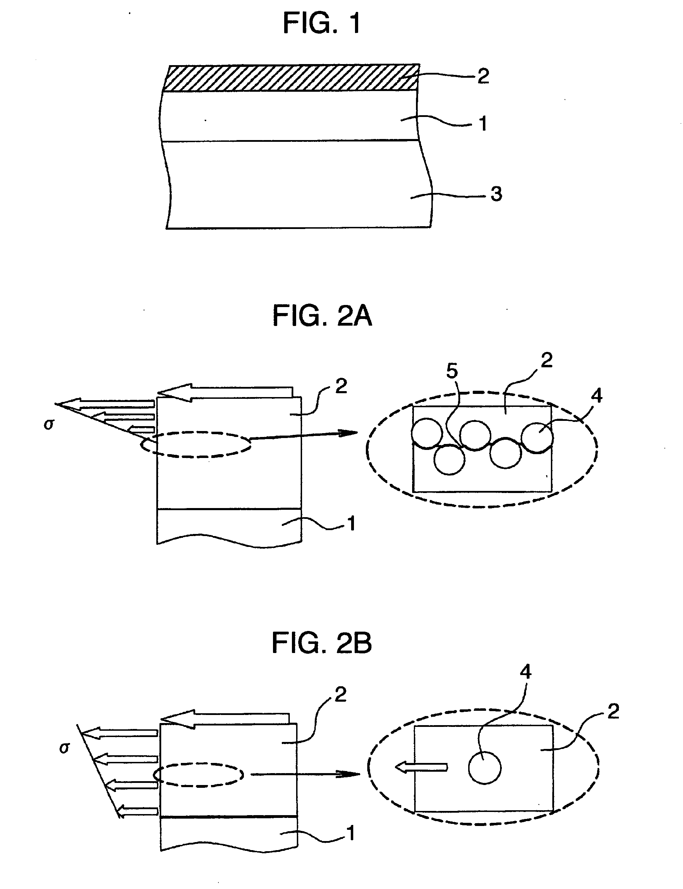

Embodiments of the invention will be described below. Fig. 1 is a cross sectional view schematically showing a sliding bearing according to an embodiment of the invention. A sliding bearing is structured such that a resin layer 2 is provided on a surface of a bearing metal 1 formed with a copper alloy or an aluminum alloy or the like and bonded to a surface of a back metal 3. In the embodiment, the resin layer 2 is a sliding layer, of which a base resin is a heat resistant resin such as PAI resin, PBI resin, PI resin, or the like and which contains 3 to 15 volume percent of film strength control particles having an average particle size of 0.05 to 0.7 µm. Also, various metals, intermetallic compounds, ceramic powder, etc., which form a dissimilar material being high in strength relative to resins, can be used as film strength control particles. In particular, ceramics being high in strength and further low in ductility is preferable in order to make shear pieces minute. Ceramics such as alumina, silica, titania, zirconia, oxides such as yttrium oxide, scandium oxide, etc. and carbides such as TiC, SiC, etc. can be used. Further, it is possible to add 25 to 55 volume percent of one or more of MoS₂, Gr, PTFE as a solid lubricant in needed. In addition, it is also possible to use WS₂, BN as solid lubricant. Also, the average particle size of film strength control particles was measured by means of the laser diffraction scattering method.

By the way, when 3 to 15 volume percent of film strength control particles having an average particle size of 0.05 to 0.7 µm is added to the thermostability resin such as PAI resin, PBI resin, PI resin, or the like, elastic deformation of the resin layer 2 caused by shearing stress σ upon contact with a rotating shaft is prevented by film strength control particles 4, and stress concentration occurs. Breakage occurs on resin neck portions 5, in which particles are close to one another and which are small in cross sectional area. Therefore, wear occurs to produce minute shear pieces, while peeling (thick, solid line) occurs at an interface of the resin layer and the bearing metal 1, which is weak in bond strength, as shown in Fig. 2B before shear occurs on the resin layer 2 due to stress concentration in the case where the film strength control particles 4 are very small in quantity.

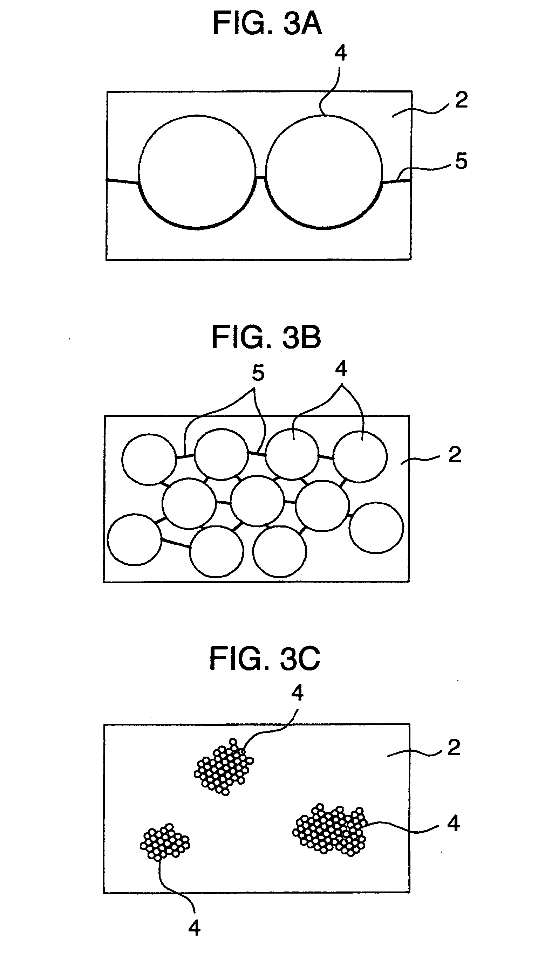

Also, when film strength control particles having an average particle size of more than 0.7 µm are used, they bear a load from the shaft as hard particles to achieve an increase in wear resistance but the resin neck portions 5 are decreased in quantity, so that peeling between the bearing metal 1 and the resin layer 2 is liable to occur since shearing stress on the resin layer 2 becomes hard to relax. Also, when film strength control particles 4 having an average particle size of more than 0.7 µm are used, the film strength control particles 4 roll on a resin surface to easily bring about roughening abrasion. On the other hand, film strength control particles 4 having an average particle size of less than 0.05 µm are not only high in industrial price but also liable to coagulate in a resin paint as shown in Fig. 3C, so that the film strength control particles 4 are not uniformly dispersed in the resin.

Also, in the case where the rate of content of the film strength control particles 4 is less than 3 volume percent, the resin neck portions 5 are decreased in quantity to make it hard for minute shear pieces to generate, but when the rate of content is over 15 volume percent, the resin neck portions 5 become too large in quantity as shown in Fig. 3B, so that a marked decrease in film strength is caused to lead to a decrease in wear resistance.

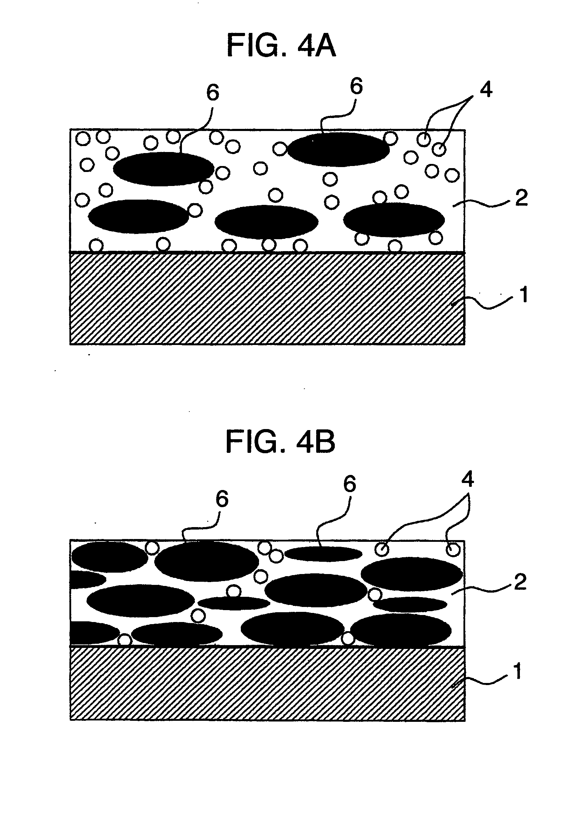

Also, as shown in Fig. 4A, the resin layer 2 containing the film strength control particles 4 can be heightened in sliding characteristics by adding 25 to 55 volume percent of a solid lubricant 6 containing one or more of MoS₂, Gr, PTFE to the resin layer 2. In this case, since the film strength control particles 4 are present in a dispersed manner in the resin layer 2 and not dispersed in particles of the solid lubricant 6, a form of an wear, in which minute shear pieces generate, is the same as that in case of not containing the solid lubricant 6. Peeling is not generated by an effect of relaxing the shearing stress applied on the resin layer 2 and the bearing metal 1 owing to the film strength control particles 4 and an effect of preventing direct contact between the solid lubricant 6 and the bearing metal 1 since the film strength control particles 4 are dispersed in the resin layer 2 to be present between the solid lubricant 6 and the bearing metal 1.

Since MoS₂, Gr, PTFE added as the solid lubricant 6 are flat and the solid lubricant 6 is in no way bonded to the bearing metal 1 but only contacts therewith, however, when 55 volume percent or more of the solid lubricant 6 is added to the resin layer 2, a contact area with the solid lubricant 6 is increased at an interface of the bearing metal 1 and a contact area of the bearing metal 1 with the resin is decreased as shown in Fig. 4B, thus making whole peeling liable to occur, but when 25 volume percent or less of the solid lubricant is added, conformability is decreased and so it is not possible to achieve an improvement in sliding characteristics.

Subsequently, an explanation will be given to results obtained by carrying out wear tests with respect to an embodiment, in which the resin layer 2 structured in the manner described above is provided, and a comparative example, in which a conventional resin layer is provided, with reference to TABLE 1. In the embodiment, a flat plate obtained by bonding a copper bearing alloy layer to a steel sheet making a back metal was worked into a half cylindrical bearing and then subjected to degreasing treatment, and surfaces of the bearing alloy layer were succeedingly subjected to blasting to be made rough. Further, after washing with an acid, washing with warm water and drying, a composition obtained by diluting compositions shown in Embodiments 1 to 12 in TABLE 1 with an organic solvent (N-methyl-2-pyrolidone) was blown against and coated on surfaces of the bearing alloy by means of air spray. Thereafter, the organic solvent was dried and removed and baking was performed at 250°C for 60 minutes. Here, the resin layer had a thickness of 25 µm. In addition, the volume fraction of the solid lubricant according to Embodiments 7 to 12 is indicated by a volume fraction relative to a total volume of a resin, film strength control particles, and a solid lubricant.

In the Comparative example, a flat plate obtained by bonding a copper bearing alloy layer to a steel sheet making a back metal was worked into a half cylindrical bearing and then subjected to degreasing treatment, and surfaces of the bearing alloy layer were succeedingly subjected to blasting to be made rough. Further, after washing with an acid · washing with warm water and drying, a composition obtained by diluting compositions shown in Comparative examples 1 to 12 in TABLE 1 with an organic solvent (N-methyl-2-pyrolidone) was blown against and coated on surfaces of the bearing alloy by means of air spray. Thereafter, the organic solvent was dried and removed and baking was performed at 250°C for 60 minutes. Here, the sliding layer had a thickness of 25 µm. In addition, the volume fraction of the solid lubricant according to the comparative examples 7 to 12 is indicated by a volume fraction relative to a total volume of a resin, film strength control particles, and a solid lubricant.

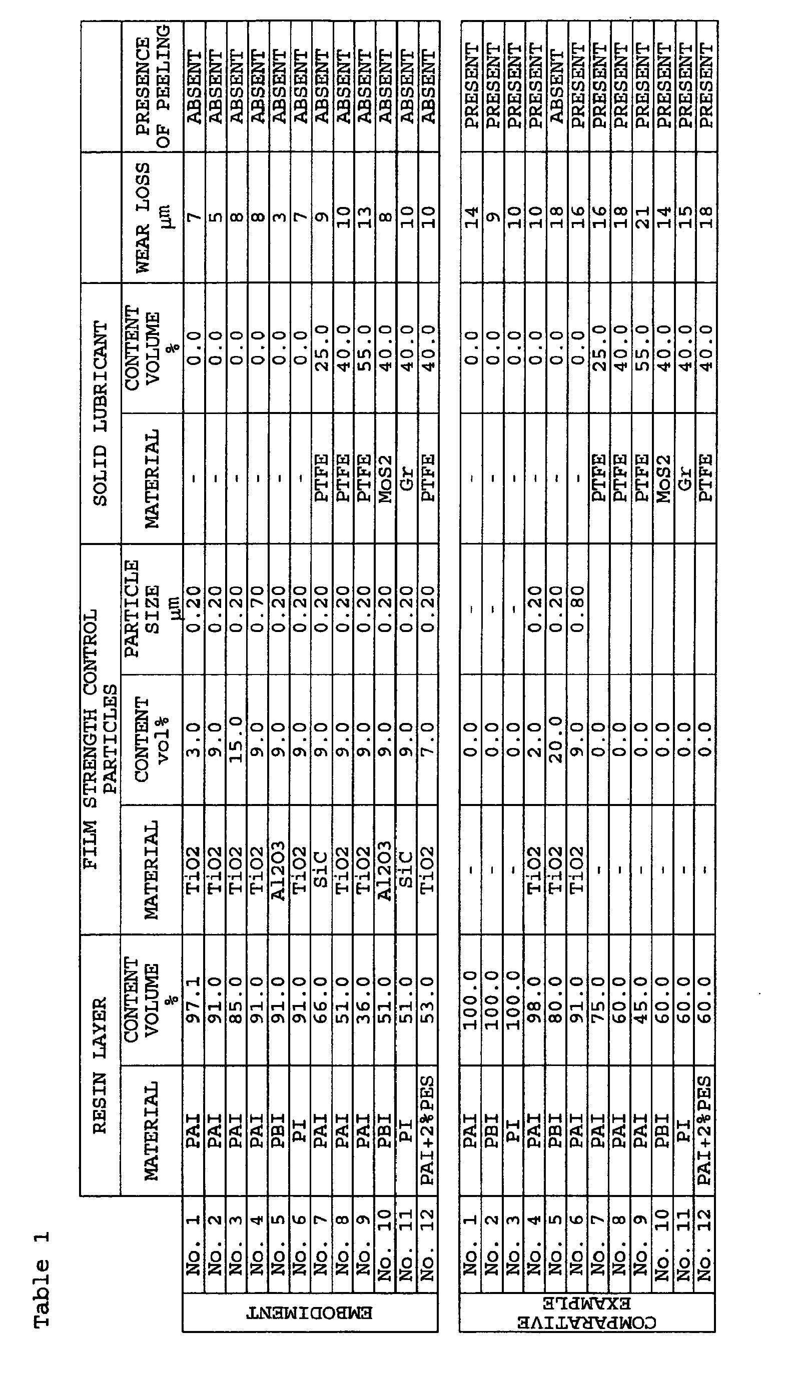

The wear tests were conducted with the use of a bearing testing machine in a cylindrical state, in which half cylindrical bearings of an embodiment and a comparative example were paired, under test conditions indicated in TABLE 2 and wear loss was measured. Also, presence of peeling of the resin layer was evaluated by visual observation of out appearance after the wear tests.

**Table2**

| | |
|---|---|
| SURFACE PRESSURE | 70MPa |
| SLIDING SPEED | 10m/sec |
| LUBRICATION | FORCE FEED |
| LUBRICATING OIL | SAE#30 |
| SUPPLIED OIL TEMPERATURE | 100°C |
| MATING SHAFT | S55C QUENCHING |
| TESTING TIME | 10Hr |

In Embodiments 1 to 3, PAI resin was used as a base resin, TiO₂ having the same particle size (0.20 µm) was added as film strength control particles in lower limit (3 volume %)· intermediate (9 volume %)· upper limit (15 volume %), and any solid lubricant was not added. Then wear loss was small and peeling was not found in the three Embodiments. In Embodiment 4, in which the same PAI resin as that in Embodiments 1 to 3 was used and the same kind of TiO₂ was added as film strength control particles in intermediate (9 volume %), the film strength control particles were at an upper limit of 0.7 µm in particle size, and also in this case, wear loss was small and peeling was not found. In Embodiment 5, the base resin and the film strength control particles in Embodiment 2 were replaced by PBI resin and Al₂O₃, and in Embodiment 6, only the base resin in Embodiment 2 was replaced by PI resin, in which Embodiments 5 and 6 wear loss was small and peeling was not found.

In Embodiments 7 to 9, PAI resin was used as a base resin, SiC or TiO₂ having the same particle size (0.20 µm) was added as film strength control particles in intermediate (9 volume %), and PTFE was added as a solid lubricant in lower limit (25 volume %)· intermediate (40 volume %)· upper limit (55 volume %). In this case, wear loss was slightly increased as compared with those in Embodiments 1 to 6 but peeling was not found. In Embodiment 10, the base resin, the film strength control particles, and the solid lubricant in Embodiment 8 were replaced by PBI resin, Al₂O₃, and MoS₂, and in Embodiment 11, the base resin, the film strength control particles, and the solid lubricant in Embodiment 8 were replaced by PI resin, SiC, and Gr, in which Embodiments 10 and 11 wear loss was small and peeling was not found. Further, in Embodiment 12, a mixture of 2 volume % of PES resin with PAI resin was used as the base resin in Embodiment 8 and TiO₂ being film strength control particles was decreased by 2 volume % corresponding to an increase in PES resin, in which Embodiment 12 wear loss was small and peeling was not found as in the manner as in Embodiment 8.

On the other hand, since in Comparative examples 1 to 3 PAI resin, PBI resin, and PI resin, respectively, is used as a base resin but no film strength control particles and no solid lubricant is contained, wear loss was increased as compared with those in Embodiments 1 to 6 and peeling was generated above all. Also, since in Comparative examples 4 to 6 PAI resin, PBI resin, and PI resin is used as a base resin and used film strength control particles, respectively, being less than a lower limit (2 volume %) and more than an upper limit (20 volume %) and larger (0.8 µm) in particle size than an upper limit, wear loss was large in quantity and peeling was observed except Embodiment 5. In Embodiment 5, it resulted in that peeling was not observed but wear loss was large in quantity. Further, while in Comparative examples 7 to 12 only a solid lubricant is added to PAI resin (including PAI resin mixed with a slight quantity of PES resin), PBI resin, and PI resin but added no film strength control particles, the Comparative examples 7 to 12 resulted in that wear loss was large in quantity and peeling was observed in all of them.

As understood from the results of the wear tests conducted on the Embodiments and the Comparative examples, a highly durable resin layer being sufficient in thermostability and wear resistance and susceptible to no peeling at the time of initial operation can be obtained by adding 3 to 15 volume percent of film strength control particles having an average particle size of 0.05 to 0.7 µm to a resin layer, of which a base resin is composed of one or more of PAI resin, PBI resin, and PI resin. Also, a resin layer containing film strength control particles can be heightened in sliding characteristics by adding 25 to 55 volume percent of a solid lubricant containing one or more of MoS₂, Gr, PTFE to the resin layer.

## Claims

1. A sliding bearing comprising a resin layer (2), of which a base resin is composed of one or more of polyamide imide resin, polybenzimidazole resin, and polyimide resin, coated on a surface of a bearing alloy (1), and
wherein 3 to 15 volume percent of film strength control particles (4) having an average particle size of 0.05 to 0.7 µm is added to the resin layer (2).

2. The sliding bearing according to claim 1, wherein 25 to 55 volume percent of a solid lubricant (6) containing one or more of molybdenum disulfide, graphite, and polytetrafluoroethylene resin is added to the resin layer (2).
